Europäisches Patentamt

European Patent Office

Office européen des brevets

(19)

(11) Publication number: **0 107 352**
**A1**

(12) **EUROPEAN PATENT APPLICATION**

(21) Application number: **83305665.8**

(22) Date of filing: **23.09.83**

(51) Int. Cl.³: **C 01 F 7/02, C 25 D 1/14, C 25 D 13/02, C 04 B 35/10 // C09K3/14, C04B31/16**

(30) Priority: **23.09.82 US 421994**

(71) Applicant: **Kennecott Corporation, Midland Building 101 Prospect Avenue, Cleveland Ohio 44115 (US)**

(43) Date of publication of application: **02.05.84 Bulletin 84/18**

(72) Inventor: **Gerk, Alvin P., 139 Jackson Street, Youngstown New York 14174 (US)**

(84) Designated Contracting States: **BE CH DE FR GB IT LI NL**

(74) Representative: **Fisher, Bernard et al, Raworth, Moss & Cook 36 Sydenham Road, Croydon Surrey CR0 2EF (GB)**

(54) Formation of alumina products from a liquid dispersion through the use of membrane electrophoretic deposition.

(57) A process for the formation of high alumina products using electrophoretic deposition on a membrane (15). In the process of the invention, a liquid dispersion comprising from about 0.1 to about 40 weight percent aluminium oxide monohydrate and optionally a dissolved metal-containing sintering aid is formed and placed into an electrophoretic cell having an anode (10), a cathode (5), and at least one membrane (15) positioned between said anode (10) and cathode (5). A D.C. current is applied between said anode (10) and cathode (5) causing the deposit of a precipitate of concentrated aluminium oxide monohydrate material onto the membrane (15) and the cathode (5). The deposit may then be removed from the membrane (15), dried and fired, with or without a separate calcining step, to produce an alumina product.

Formation of Alumina Products from a Liquid Dispersion
Through the use of Membrane Electrophoretic Deposition

This invention relates to alumina products and more particularly to the use of membrane electrophoresis in the formation of high alumina products from an alumina monohydrate liquid dispersion.

The concept of producing alumina-based materials useful as abrasives by sol-gel technology is known as illustrated by U.S.-A-4,314,827 and U.S. Patent Application, Serial No. 377,782, and British Patent Application No. 8215424 (published under No. 2099012A) the disclosures of which are incorporated herein by reference. U.S.-A-4,314,827 generally discloses that a calcium ion-free and alkali metal ion-free, dense, non-fused, synthetic, aluminium oxide-based granular abrasive material having randomly oriented crystallites with diameters on the order of 3,000 Angstroms or less can be made by gelling a colloidal dispersion or hydrosol of alumina monohydrate and a modifying component, followed by firing the gel to a temperature of at least $1250^{\circ}C$. U. S. Serial No. 377,782 and G.B.-A-2099012 disclose a process for forming an abrasive grain from a sol-gel which contains aluminium oxide monohydrate, a dissolved metal-containing sintering aid and from above 0.05 to about 1.8 weight percent sodium plus calcium, provided that the weight percent calcium is from 0 to about 1.8 and the weight percent sodium is from 0 to about 0.4. The high sodium and calcium is permitted due to rapid heating of the sol-gel after drying through a temperature range of from below about 800°C to above about 1200°C, prior to sintering the dried gel at a temperature above 1200°C.

In U.S.-A-4,314,827, U.S. Serial No. 377,782 and G.B.-A-2099012, high amounts of energy are used to dry the alumina monohydrate gel materials. In addition, during drying of the gel, there is a strong tendency for cracking to occur due to the large shrinkage associated with dehydration. When the sol-gel process is used, acid peptizing and the addition of soluble salts as sintering aids results in relatively high levels of anions which must be removed. In addition to the cost of the acid consumed in the sol-gel process, the necessity of removing anions during calcining creates environmental problems and increases the tendency for cracking.

Copending U. S. Patent Application Serial No. 422,258 entitled "FORMATION OF ALUMINA PRODUCTS FROM A LIQUID DISPERSION THROUGH THE USE OF ELECTROPHORETIC DEPOSITION" by Alvin P. Gerk, and the corresponding European Patent Application filed on even date herewith (Attorney's reference 28464), the teachings of which are incorporated herein by reference, disclose a process for the formation of alumina products from a liquid dispersion through the use of electrophoresis. In the process of the invention, a liquid dispersion comprising from about 0.1 to about 40 weight percent aluminium oxide monohydrate is formed and placed into an electrophoretic cell having an anode and at least one cathode. A D.C. current is applied between said anode and cathode causing the deposit of a precipitate of concentrated aluminium oxide monohydrate material onto the cathode. The deposit is then dried and the dried material is then heated to form the final product. The cathode deposit of the invention is far superior to the alumina gel materials formed by the processes of U.S.-A-4,314,827 or U.S. Serial No. 377,782 or G.B.-A-2099012.

The cathode deposit is very high in solids content, thus decreasing the shrinkage which takes place during drying. The resultant reduction in cracking allows the cathode deposit to be made in large thick sections, thus creating more potential uses of the material. In addition, the higher solids content of the precipitate in comparison to most gels results in significant energy savings.

Although the cathode deposit in copending Patent Application Serial No. 422,258 (Attorney's Docket No. 10219) is a significant improvement over the alumina gel materials formed by the process of U.S.-A- 4,314,827, U.S. Serial No. 377,782 and G.B.-A- 2099012, there are drawbacks associated with the deposition of the alumina monohydrate material directly on the cathode, which drawbacks may detract from the quality of the deposit. First, shrinkage of the deposit on the metallic cathode as the water content is reduced results in a high degree of cracking in a thin layer adjacent to the metallic cathode. This high degree of cracking is a result of adhesion of the deposit to the metallic cathode. Second, due to water electrolysis, hydrogen gas is generated at the cathode where the electrophoretic deposition occurs, and this hydrogen gas results in the formation of pipes, channels, and voids in the deposited precipitate. Third, in a batch electrophoretic cell designed for the production of large quantities of material, the amount of non-reactive metallic electrodes required may prove quite costly.

Accordingly, it is a principal object of the invention to provide a process for the electrophoretic deposition of alumina monohydrate in which the hydrogen gas generated by water electrolysis does not cause pipes, channels or voids to be formed in the electrophoretic deposit.

It is another object of the present invention to provide such a process in which there is little cracking of the deposit during drying.

It is a further object of the present invention to reduce the cost associated with building an electrophoretic deposition cell by replacing costly metallic electrodes with relatively inexpensive membranes.

The problems of the prior art are overcome by the discovery that membrane electrophoresis may be used in the formation of high alumina products from an alumina monohydrate liquid dispersion. The alumina materials of the invention may be used for any suitable purpose, i.e., coatings, reactive powders, electronic ceramics, novel structural ceramics, refractories, catalysts and abrasives.

In the process of the invention, a liquid dispersion comprising from about 0.1 to about 40 weight percent aluminium oxide monohydrate is formed and placed into an electrophoretic cell having an anode, a cathode, and at least one membrane positioned between said anode and cathode. A D.C. current is applied between said anode and cathode causing the deposit of a precipitate of concentrated aluminium oxide monohydrate material onto the membrane and the cathode. The concentrate of the precipitate is approximately 50 percent solids. In order to prevent the deposit of a precipitate on the cathode, any of three alternate processes can be followed. First, at least one transverse hole may be drilled in the cathode and the cathode may be covered with an additional membrane. Secondly, while the electrical potential is being applied, the electrophoretic bath may be strongly agitated in the immediate area of the cathode. Finally, the liquid dispersion in the cathode chamber may be replaced with a compatible conductive liquid which does not contain dispersed alumina monohydrate.

After deposition, the deposit is dried. This drying step may take place either before or after the deposit is removed from the membrane, and if applicable, from the cathode. After the deposit is dried, further processing is dependent upon the mature of the desired end product and the particular composition of the deposit. For example, the material may (1) be fired to a temperature of at least 1250°C for a sufficient time to convert the material to an alpha alumina product; (2) be fired to a temperature up to between about 550°C and 1200°C for a sufficient time to convert the solid material to a gamma alumina product; (3) be rapidly heated to above about 1200°C in less than 10 minutes and then sintered between about 1200°C and about 1550°C for a sufficient sintering time to convert said material to an alpha alumina product, or (4) be calcined and then rapidly heated to above about 1200°C in less than 10 minutes, and sintered between about 1200°C and 1550C for a sufficient sintering time to convert said material to an alpha alumina product. In the four options above-mentioned, the material can be crushed prior to either the firing step, the rapidly heating step, or the calcining step in order to produce grains of a desired size to be used, for instance, as abrasives.

In the preferred process of the invention, the liquid dispersion is an aqueous dispersion comprising 5 to 15 weight percent aluminium oxide monohydrate, from about 0.02 to about 0.25 moles of a volatile acid per mole of aluminium oxide monohydrate, and at least one dissolved metal-containing sintering aid in an atomic ratio of metal in the sintering aid to aluminium in the aluminium oxide monohydrate of from 1:2 to 1:35.

In accordance with the process of the invention, hydrogen gas is not generated at the membrane in the electrophoretic cell, thus eliminating the problem of gas formation under the electrophoretic deposit which normally occurs when the deposit is formed on a metallic cathode. In addition to eliminating the problem of gas formation under the electrophoretic deposit, the membrane would have little tendency of adhesion to the electrophoretic deposit and therefore cracking of the deposit during shrinkage would be greatly reduced. Also, the replacement of expensive metallic electrodes by inexpensive membranes provides a cost savings.

Embodiments of the invention will now be described by way of example with reference to the accompanying drawings, in which:

Fig. 1 is a front view of a batch electrophoretic cell of the invention;

Fig. 2 is a front view of a cathode having a pattern of closely spaced transverse holes extending throughout its width; and

Fig. 3 is a front view of a batch electrophoretic device comprising 2 parallel electrophoretic cells of the invention.

In accordance with the process of the invention, the high alumina product is prepared from a liquid (preferably water) dispersion comprising from about 0.1 to about 40 weight percent aluminium oxide monohydrate. The liquid dispersion may be a sol which is a colloidal dispersion or a gel which is a colloidal dispersion with interaction between the particles to form a gel. The dispersion is formed by any suitable means which may simply be mixing of the aluminium oxide monohydrate with water. The liquid is

0107352

almost always water but may be another liquid in which the aluminium oxide monohydrate will disperse. Any suitable mixing apparatus may be used including both high and low shear mixers.

The quantity of aluminium oxide monohydrate in the dispersion is usually from 0.1 to about 40 and preferably from about 5 to about 15 percent by weight of the dispersion. Aluminium oxide monohydrate as used herein is intended to include aluminium oxide hydrate having a stoichiometric formula of $1/2\ Al_2O_3.^xH_2O$ where x is 0.5 to 3. Aluminium oxide monohydrate is also known as boehmite. Aluminium oxide monohydrate, as used herein, is also intended to include, without limitation, pseudo boehmite.

A commercially available aluminium oxide monohydrate, which is useful in the present invention, is a byproduct of the Ziegler process for making primary alcohol and is sold under the trade designations "Dispural" and "Catapal". These products are characterised by exceptional purity, high surface area and very small crystallite size. Aluminium oxide monohydrate may also be obtained by the hydrolysis of aluminium alkoxides, by precipitation from sodium aluminate solutions and by other processes.

If an abrasive material is the desired final product, then the liquid dispersion preferably further comprises at least one dissolved metal-containing sintering aid in an atomic ratio of metal in the sintering aid to aluminium in the aluminium oxide monohydrate of from 1:2 to 1:35 and more preferably from 1:7 to 1:25. The sintering aid is a dispersable or soluble metal oxide or metal oxide precursor, i.e., a compound which will form a metal oxide during drying, calcining, or sintering. The liquid dispersion may comprise up to 50 weight percent of such sintering aids.

In general, the sintering aid is usually a precursor of magnesium oxide, zinc oxide, cobalt oxide or nickel oxide and is therefore, when the liquid is water, a water soluble or dispersable compound of magnesium, zinc, nickel or cobalt. Specific examples of such precursors are the nitrates and chlorides of those metals. The nitrates of those metals are particularly preferred. The sintering aid may be prepared in situ, for example, by adding magnesium oxide or hydroxide to an aqueous solution of inorganic acid such as hydrochloric or nitric acid to form a water soluble salt of magnesium. The sintering aid is usually a water soluble salt but may be a water soluble base. The preferred sintering aid is magnesium oxide or magnesium nitrate and the preferred amount of magnesium oxide in the alumina product of the invention is between about 2 and about 10 weight percent.

Useful abrasive material is produced when at least one other metal oxide or its precursor is included in addition to at least one of the metal oxides or precursors set forth above. Examples of such other metal oxides include silica, chromia, titania and zirconia.

The liquid dispersion preferably includes a dispersing aid, such as acid. For example, from about 0.02 to 0.25 and preferably from 0.05 to about 0.15 moles of a volatile acid per mole of aluminium oxide monohydrate greatly aids dispersion. Examples of such acids are nitric, hydrochloric, acetic and formic acids. Nitric acid is preferred, since it appears to provide the greatest stability in the colloidal dispersion of alumina monohydrate.

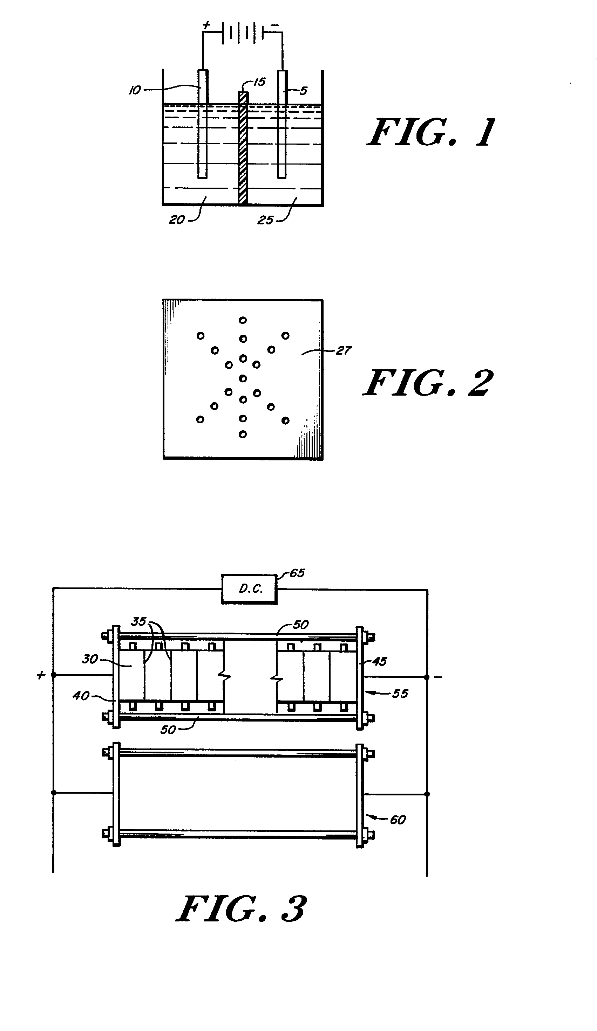

After the liquid dispersion is formed, it is placed into an electrophoretic cell having an anode, a cathode, and at least one membrane positioned between said anode and cathode. An example of such an electrophoretic cell is the batch electrophoretic cell depicted in Fig. 1. The cathode 5 comprises an inert conductive material such as platinum, platinum coated titanium, or a conductive, corrosion resistant material such as stainless steel. The anode 10 can either contain a similarly inert conductive material, or instead may comprise a metal which will contribute to the deposit. Examples of metals which will contribute to the deposit are magnesium, nickel cobalt, and zinc.

The only requirements of the membrane 15 are that colloidal particles cannot readily pass through the membrane and that ions, such as hydrogen ion and nitrate ion, are able to pass through the membrane. The membrane 15 may comprise either an ion exchange membrane or a microporous membrane.

A microporous membrane allows particles up to a certain size to pass through it. The microporous membranes of the invention may be made of cellulose, for example, Spectra/-Por No. 1 dialysis/ultrafiltration membranes with a molecular weight cutoff of 6,000 to 8,000.

If an ion-exchange membrane is used, nothing larger than an ion will be able to diffuse through the membrane. Although the material of the ion-exchange membrane used in the present invention is not especially restricted, the membrane may comprise chemically resistant highly-bridged polymeric skeletons on which many anion and cation-exchange groups such as sulfonate groups, carboxylate groups, phenol groups, ammonium groups, etc. are attached as substituents. In addition, the membrane comprising especially chemical-resistant fluoropolymer resins is particularly advantageous since the membrane comprising the fluoropolymer resin is very easily detachable from the electrophoretic deposit and strong adhesion of the electrophoretic deposit to the fluoropolymer seldom occurs. Among the ion-exchange membranes comprising these fluoropolymer resins, the preferred membrane comprises a copolymer of perfluorovinyl ether and tetrafluoroethylene, which has pendant-type sulfonate groups (Nafion, a product of E. I. DuPont de Nemours & Co.).

Different shaped membranes can be used for various purposes. For instance, if ceramic tubing is the desired product, the membrane should be tubular in form. There is no limitation on the amount of membranes that may be positioned between the anode and the cathode as long as there is a sufficient power supply.

If the liquid dispersion containing tha aluminium oxide monohydrate is placed in both the anode chamber 20 and cathode chamber 25 of the electrophoretic cell in Fig. 1, then after the electrical potential is applied, particles from the dispersion will be deposited on the cathode 5 as well as on the membrane 15.

In order to eliminate the deposit on the cathode in an electrophoretic cell of the invention, three alternate processes may be followed. In the first process, at least one transverse hole extending throughout the width of the cathode is made in the cathode, preferably by drilling, and the cathode is then covered with a membrane. As seen in Fig. 2, the cathode 27 preferably has a pattern of closely spaced holes in it. The purpose of drilling holes in the cathode would be to allow the escape of hydrogen gas without passage through the deposit.

In the second process that may be followed to eliminate the deposit on the cathode, the electrophoretic bath is strongly agitated in the neighbourhood of the cathode while the electrical potential is applied. Since the liquid dispersion preferably contains dilute acid and since the deposit readily dissolves in dilute acid, increased agitation of the electrophoretic bath promotes dissolution of the precipitate as it is formed. One way of increasing cathode agitation is through the use of high pressure spray jets directed toward the cathode within the electrophoretic bath.

In the third process that may be followed, the liquid dispersion comprising the aluminium oxide monohydrate is placed into the anode and membrane chambers of the electrophoretic cell and a compatible conductive liquid is placed into the cathode chamber of the electrophoretic cell. The conductive liquid in the cathode chamber preferably comprises a dilute acid, such as nitric acid and water.

After the dispersion is added to the electrophoretic cell, the electrical potential is applied between the anode and the cathode, causing particles from the dispersion to be deposited on the membrane, and if none of the above-mentioned processes are followed, on the cathode as well. After the current is allowed to flow for a sufficient time, the power supply is turned off, disconnected and the electrophoretic cell disassembled.

If desired, electrophoretic cells of the invention may be connected in parallel. Also, a continuous rather than a batch electrophoretic cell may be used. If a continuous rather than a batch electrophoretic cell is used, a membrane is continuously fed through the electrophoretic cell while the electrical potential is applied.

When an aqueous dispersion is used, it has been found that the water content of the deposited precipitate consistently appears to be in a narrow range of about 50%, even though a wide variety of both electrical and bath conditions have been employed. In addition, the membrane deposit does not appear to readily dissolve or re-disperse when placed in a beaker of pure de-ionised water. It does, however, redisperse when placed in a weak nitric acid solution.

If the amount of aluminium oxide monohydrate in the dispersion is between 20 and 40 weight percent, it is not only hard to keep the dispersion homogenous, but there is a tendency for a gel to be formed on top of the deposited precipitate. On the other hand, if a very low amount, i.e., below about 2 weight percent aluminium oxide monohydrate is used in the dispersion, the efficiency of the electrophoretic cell is substantially decreased.

In either a batch or a continuous process, the membrane deposit and the cathode deposit (if there is a cathode deposit) may be removed from the membrane or cathode either prior to or after drying. "Dried" or "drying", as used herein, means that at least 90 percent of free (unbound) water is removed to form a solid. When the deposit is removed from the membrane or from the cathode, the deposit typically breaks up into large pieces of material. The membranes may then be re-used. Depending on the degree of care exerted in removing the deposit from the membrane, very large pieces may be obtained. If care is exerted, platelets of precipitate at least a few inches in size may be obtained. Drying may be accomplished by any means known to those skilled in the art. When heat is used in the drying process, the drying temperature is usually from about 80 to about 110$^{o}$C. The drying time can vary from 1 to about 72 hours at atmospheric pressure depending upon the quantity of water or other liquid present, upon relative humidity, upon drying temperature and upon the desired final product. For example, if the final product is to be an abrasive, the deposit does not have to be dried as slowly as it would for other applications. Drying the deposit slowly at a fairly low temperature, such as 25°C, with controlled humidity, will produce a large product with very few, if any, cracks.

If the desired product is alumina particles, to be used for example, as abrasive grains, then after the deposit is dried and removed from the membrane or cathode, it is crushed or broken by any suitable means such as a hammer or ball mill to form particles or grains. Any suitable method for comminuting the solid material may be used and "crushing" is intended to include all such methods.

After the deposit is dried, and if desired, crushed, there are many options as to what to do next with the material, depending on what type of product is desired. An alpha alumina product can be formed by basically following the remaining steps of U.S.-A- 4,314,827. In accordance with U.S.-A-4,314,827, after the pieces of material have dried, they are fired to a temperature of at least 1250°C. Care must be taken to increase the temperature slowly enough so that the material will not crack. At approximately 600°C, essentially all of the chemically bound water will be released from the hydrated alumina. Firing is continued until all the material has reached a temperature of at least 1250°C and more typically 1300°C. After 3 to 5 hours at 1250°C or more, essentially all of the alumina is converted to an alpha alumina product. If an abrasive product, such as an abrasive grain, is desired, the temperature may be raised more rapidly during the calcining process. In addition, if an abrasive product is to be formed by this process, the liquid dispersion should contain below .05 percent by weight total calcium ion and alkali metal ion.

If a gamma alumina material is the desired product, then the dried deposit should only be fired at a temperature up to between about 550°C and 1200°C, and preferably between 800 to 900°C, for a sufficient time to convert the alumina monohydrate to any of the desired crystal structures generally grouped under the term gamma alumina.

An alpha alumina product may also be formed by basically following the remaining steps of U.S. Serial No. 377,782 or British Application 2099012A. After the deposit is dried, and if desired, crushed, the material is heated to a temperature between about 250°C and about 800°C until essentially all water is removed. "Essentially", as used in this context, means that all free water and over 90 percent of bound water is removed. The calcining time to remove essentially all water varies depending on the desired product. If the desired product is not an abrasive product, the heating rate during calcining should be fairly slow in order that minimal cracking should occur.

After drying and after calcining, the pieces of material are rapidly heated to above about 1200°C. The rapid heating usually occurs in less than 10, preferably less than 5, and most preferably in less than 1 minute. This rapid heating step permits the formation of a superior abrasive grain or other alumina product from a liquid dispersion containing relatively high amounts of calcium and sodium. For instance, a superior abrasive grain may be formed from a liquid dispersion comprising from 0 to about 1.8 weight percent sodium plus calcium, provided that the weight percent calcium is from 0 to about 1.8 and the weight percent sodium is from 0 to about 0.4. Any suitable means or method for rapidly heating the material or grains may be used, such as injection of the material or grains in other than bulk form, i.e. separately, into a furnace preheated to above 1200°C and preferably to above 1300°C.

It is possible to eliminate the calcining step and instead rapidly heat the materials to above 1200°C after drying. This procedure is particularly desirable for producing certain type abrasives.

After the material is rapidly heated to above 1200°C, it is continued to be heated at a sintering temperature between about 1200°C and about 1550°C, preferably between 1250°C and 1500°C, for a sufficient sintering time to convert the material to an alpha alumina product. At least a portion of the heating usually occurs above 1300°C. Sufficient sintering time depends on sintering temperature, and is usually from about 5 to about 30 minutes but may be less than about 5 minutes, e.g., from about 1 to about 5 minutes.

The alpha alumina materials of the invention are particularly useful as abrasives, and the invention includes bonded, coated and non-woven abrasive articles comprising the abrasive grain of the invention. Said abrasive grain has excellent wear characteristics, maintains a high cutting rate, and removes large quantities of carbon steel stock.

The invention is further illustrated by the following nonlimiting examples:

## EXAMPLE I

Abrasive grain was manufactured in a batch device having 2 parallel electrophoretic cells 55 and 60, each containing seven membranes, as seen in Fig. 3. A 38.1 mm (1-1/2 inch) slice of 203.2mm (8 inch) diameter PVC pipe 30 served as a spacer between each membrane 35. Each membrane 35 was held in place with an O-ring. The type of membrane used was a Spectra/Por No. 1 dialysis/ultrafiltration membrane with a molecular weight cut-off of 6,000 to 8,000. Opposing holes were drilled in each spacer 30 and tubes attached to act as inlet and exit ports for the electrophoretic bath. The inlet tube positioned at the bottom of each spacer 30 was connected to a fluid distributor which was fed from a large reservoir of electrophoretic bath via a pump. The exit tube at the top of the spacer 30 was connected to a return line to the reservoir. An anode plate 40 and cathode plate 45 were placed on opposite ends of the electrophoretic cell and the device was held together by connecting tie rods 50. The electrophoretic cells 55 and 60 were then connected in parallel to the D.C. power supply 65.

In a separate container, an electrophoretic bath containing either 0.04 or 0.06 moles $HNO_3$ per mole of AlOOH, and 5 weight percent Dispural, and having a composition, on an oxide basis of about 94 weight percent alumina and 6 weight percent magnesia was prepared in the following manner. A slurry of Dispural and water was prepared and peptized with dilute nitric acid. In another container, magnesium nitrate was prepared. For this, a magnesium hydroxide slurry was made and sufficient concentrated nitric acid was added for full conversion to magnesium nitrate.

The magnesium nitrate was then added to the peptized aluminium oxide monohydrate dispersion and sufficiently mixed to insure homogenuity. An electrophoretic bath prepared in the above manner was then added to the cell of Fig. 3 and the power supply was turned on. This procedure was followed 24 times, with slight variations, in order to produce enough material for grinding tests. For each run, the initial current source ranged from approximately 2 to about 10 amps, with 5 to 6 amps being the most commonly used amount.   Each run lasted approximately 14 to 25 hours.   In some runs, the electrophoretic bath of a previous run was re-used and enough new materials were added to provide an electrophoretic bath containing either 0.04 or 0.06 moles $HNO^3$ per mole of AlOOH, and 5 weight percent of Dispural, and having a composition, on an oxide basis of about 94 weight percent alumina and 6 weight percent magnesia.

All the membrane and cathode deposits were washed with water and removed from the membranes and cathodes with a spatula.   On removal from the membranes and cathodes in this manner, the deposits broke up into platelets up to about two inches in size.   The deposits were then weighed and tray dried in an oven at $90^{\circ}C$ overnight.   The deposits were then crushed, graded to 20/48, calcined to $575^{\circ}C$ in a rotary tube furnace, rapidly heated to $1415^{\circ}C$ and sintered at $1415^{\circ}C$.   The material was then regraded to make a 36 grit abrasive grain.   The A.S.G. of this material was found to be 3.56 g/cc and bulk density was 1.65 g/cc. Analysis determined the MgO concentration to be about 7.2 weight percent.

## EXAMPLE II

Abrasive grain was prepared using the procedure described in Example I, except that there were 13 runs, and in each run the electrophoretic bath contained either 0.04 or 0.06 moles $HNO_3$ per mole of AlOOH, between 5 and 7.5 weight percent Dispural, and had a composition, on an oxide basis of about 96 weight percent alumina and 4 weight percent magnesia.   Also, in some runs, instead of 2 parallel electrophoretic cells each containing 7 membranes, a single electrophoretic cell containing 6 membranes or a single electrophoretic cell containing 9 membranes was used. The A.S.G. of the sintered abrasive was 3.49 g/cc with a bulk density of 1.61 g/cc. An analysis of the material showed it to contain 5.0 percent MgO.

## EXAMPLE III

Using conventional sandpaper making equipment, the 36 grit abrasive grain from Example I was electrostatically projected onto abrasive grade 0.762 mm (0.030 inch) vulcanised fibre carrying a maker adhesive mix. The abrasive adhesive coated backing was then heated to $79.4^{\circ}C$ ($175^{\circ}F$) for one hour and $93.3^{\circ}C$ ($200^{\circ}F$) for two hours in the maker rack. After drying, a size coat was then applied by standard roll coating methods with approximately 10.433 kg/ream (23 lbs/ream) being applied. Drying and curing was then accomplished by heating the coated material for one hour at $65.6^{\circ}C$ ($150^{\circ}F$), four hours at $79.4^{\circ}C$ ($175^{\circ}F$), and 16 hours at $107.2^{\circ}C$ ($225^{\circ}F$).

After curing, the material was humidified in the conventional manner to a moisture content of less than 8% by weight. The material was then uniformly flexed and die cut into a seven inch disc. The 36 grit abrasive grain from Example II was similarly used to make a 17.8 cm (seven inch) coated fibre disc. These two discs were then evaluated on a conventional pneumatic disc grinder using quenched and tempered 4140 steel (hardness 285-320 BHN) as a workpiece and compared to two control discs made and handled in exactly the same manner except that the abrasive grain used in one was standard 36 grit brown alumina (brown) and the abrasive grain used in the other was standard 36 grit alumina-43% zirconia rapidly solidified abrasive (Al-Zr). In these tests, the abrasive disc was placed on the disc grinder in the standard manner and a 25.4 x 50.8 x 279.4 mm (1 x 2 x 11 inch) workpiece was positioned so that it engaged the disc on the 25.4 mm (1-inch) flat side at a 10-15° angle.  The disc was passed back and forth along the workpiece.

The abrasive discs in these tests were rotated at a nominal 5400 RPM's on a hard rubber type back-up pad 177.8 mm (7 inch) in diameter.  3.632 Kg (8 pounds) of dead weight in-feed force was exerted on the workpiece. Testing was for 30 seconds after which stock removed from the bar was measured (weight before grind--weight after grind) and recorded.  This sequence was continued until the measured stock removed was 5 grammes or less per grinding interval.  Total stock removed in this manner for the test discs was compared to the total stock removed for the control discs.  (Relative cutting performance).  The results of these tests can be seen in Table 1.

TABLE 1

| Example | No. Discs in Test | Avg.Cut (gm) | Std.Deviation (gm) |
|---------|-------------------|--------------|--------------------|
| I       | 5                 | 437.6        | 62.4               |
| II      | 5                 | 453.6        | 41.0               |
| (brown) | 7                 | 122          | 20.8               |
| (Al-Zr) | 5                 | 404.8        | 56.1               |

EXAMPLE IV

An electrophoretic bath containing about 0.04 moles $HNO_3$ per mole of AlOOH, 5 weight percent Dispural and having a composition, on an oxide basis of about 94 weight percent alumina and 6 weight percent magnesia was prepared in accordance with Example I.  As in Example I, this electrophoretic bath was then added to a batch device having two parallel electrophoretic cells with 7 Spectra/Por No. 1 membranes positioned between each anode and cathode.  The only difference between this batch device and the device used in Example I was that the stainless steel cathode plate 45 had a pattern of closely spaced holes drilled in it as seen in Fig. 2, and an additional Spectra/Por No. 1 membrane was placed directly over the cathode plate 43. The power supply was set at 2.5 amps constant current and run for 21.7 hours. After disassembly, the yield of dried deposit was 85 gm. average per normal membrane and 165 gm. yield on the membrane which covered the cathode. The material covering the cathode membrane was absent of the pipes, channels and voids normally found when depositing directly on the cathode. In addition, there was no deposit formed between the cathode membrane and the cathode itself.

Although this invention has been described with reference to its preferred embodiments, other embodiments can achieve the same results. Variations and modifications to the present invention will be obvious to those skilled in the art and it is intended to cover in the appended claims all such modifications and equivalents that follow in the true scope of this invention.

CLAIMS

1.  A process for the production of an alpha alumina product which comprises the steps of:

(a)  forming a liquid dispersion comprising from about 0.1 to about 40 weight percent aluminium oxide monohydrate;

(b)  placing the dispersion into an electrophoretic cell having an anode, a cathode, and at least one membrane positioned between said anode and cathode;

(c)  applying an electrical potential between said anode and cathode;

(d)  drying the resulting deposit; and

(e)  firing said dried deposit to a temperature of at least 1250°C for a sufficient time to convert said material to an alpha alumina product.

2.  A process for the production of a gamma alumina product which comprises the steps of:

(a)  forming a liquid dispersion comprising from about 0.1 to about 40 weight percent aluminium oxide monohydrate;

(b)  placing the dispersion into an electrophoretic cell having an anode, a cathode; and at least one membrane positioned between said anode and cathode;

(c)  applying an electrical potential between said anode and cathode;

(d)  drying the resulting deposit; and

(e) firing said dried deposit to a temperature up to between about 550°C and 1200°C for a sufficient time to convert said material to a gamma alumina product.

3. A process for the production of an alpha alumina product which comprises the steps of:

(a) forming a liquid dispersion comprising from about 0.1 to about 40 weight percent aluminium oxide monohydrate; and at least one dissolved metal-containing sintering aid in an atomic ratio of metal in the sintering aid to aluminium in the aluminium oxide monohydrate of from 1:2 to 1:35;

(b) placing the dispersion into an electrophoretic cell having an anode, a cathode, and at least one membrane positioned between said anode and cathode;

(c) applying an electrical potential between said anode and cathode;

(d) drying the resulting deposit;

(e) rapidly heating the dried deposit to above about 1200°C in less than 10 minutes; and

(f) continuing to heat the material at a sintering temperature between about 1200°C and about 1550°C for a sufficient sintering time to convert said material to an alpha alumina product.

4. A process according to Claim 1, 2 or 3, wherein in step (b) the cathode is covered with a membrane.

5. A process according to Claim 4, wherein the cathode has at least one transverse hole extending throughout its width.

6.    A process according to Claim 1, 2 or 3, wherein the electrophoretic cell further comprises means for agitating said liquid dispersion in the immediate area of the cathode.

7.    A process according to Claim 6, wherein in step (c) the liquid dispersion is agitated while the electrical potential is applied.

8.    A process for the production of an alpha alumina product which comprises the steps of:

(a)    forming a liquid dispersion comprising from about 0.1 to about 40 weight percent aluminium oxide monohydrate;

(b)    placing the dispersion into the anode and membrane chamber of an electrophoretic cell containing an anode, a cathode, and at least one membrane positioned between said anode and cathode; and

(c)    placing a conductive liquid into the cathode chamber of said electrophoretic cell;

(d)    applying an electrical potential between said anode and cathode;

(e)    drying the resulting deposit; and

(f)    firing said dried deposit to a temperature of at least 1250°C for a sufficient time to convert said material to an alpha alumina product.

9.    A process for the production of a gamma alumina product which comprises the steps of:

(a) forming a liquid dispersion comprising from about 0.1 to about 40 weight percent aluminium oxide monohydrate;

(b) placing the dispersion into the anode and membrane chambers of an electrophoretic cell containing an anode, a cathode, and at least one membrane positioned between said anode and cathode;

(c) placing a conductive liquid into the cathode chamber of said electrophoretic cell;

(d) applying an electrical potential between said anode and cathode to cause particles from the dispersion to be deposited on said membrane;

(e) drying the resulting deposit; and

(f) firing said dried deposit to a temperature up to between about 550°C and 1200°C for a sufficient time to convert said material to a gamma alumina product.

10. A process for the production of an alpha alumina product which comprises the steps of:

(a) forming a liquid dispersion comprising from about 0.1 to about 40 weight percent aluminium oxide monohydrate; and at least one dissolved metal-containing sintering aid in an atomic ratio of metal in the sintering aid to aluminium in the aluminium oxide monohydrate of from 1:2 to 1:35;

(b) placing the dispersion into the anode and membrane chambers of an electrophoretic cell containing an anode, a cathode, and at least one membrane positioned between said anode and cathode;

(c) placing a conductive liquid into the cathode chamber of said electrophoretic cell;

(d) applying an electrical potential between said anode and cathode;

(e) drying the resulting deposit;

(f) rapidly heating the dried deposit to above about $1200^{\circ}C$ in less than 10 minutes; and

(g) continuing to heat the material at a sintering temperature between about $1200^{\circ}C$ and about $1550^{\circ}C$ for a sufficient sintering time to convert said material to an alpha alumina product.

11. A process according to Claim 8, 9 or 10, wherein in step (c) the conductive liquid comprises a dilute acid.

12. A process according to Claim 11, wherein step (c) the conductive liquid comprises nitric acid and water.

13. A process according to Claim 1, 2, 3, 8, 9 or 10, wherein the membrane comprises an ion-exchange membrane.

14. A process according to Claim 1, 2, 3, 8, 9 or 10, wherein the membrane comprises a microporous membrane.

15. A process according to Claim 1, 2, 3, 8, 9 or 10, wherein in step (a) the liquid dispersion comprises 5 to 15 weight percent aluminium oxide monohydrate.

16. A process according to Claim 1, 2, 3, 8, 9 or 10, wherein in step (a) the liquid dispersion comprises an aqueous dispersion.

17. A process according to Claim 1, 2, 3, 8, 9 or 10, wherein the membrane is continuously fed through the electrophoretic cell while the electrical potential is applied.

18. A process according to Claim 1, 2, 8 or 9, further including, prior to the firing step, the step of crushing the dried deposit to produce grains of a desired size.

19. A process according to Claim 1, 2, 8 or 9 wherein in step (a) the liquid dispersion further comprises at least one dissolved metal-containing sintering aid with an atomic ratio of metal in the sintering aid to aluminium in the aluminium oxide monohydrate of from 1:2 to 1:35.

20. A process according to Claim 3 or 10 further including, prior to the rapidly heating step, the step of calcining the dried deposit.

21. A process according to Claim 3 or 10 further including, prior to the rapidly heating step, the step of crushing the dried deposit to produce grains of a desired size.

22. A process according to Claim 20 further including, prior to the calcining step, the step of crushing the dried deposit to produce grains of a desired size.

23. A process according to Claim 19, wherein the atomic ratio of metal in the sintering aid to aluminium in the aluminium oxide monohydrate is from 1:7 to 1:25.

24. A process according to Claim 3 or 10, wherein the atomic ratio of metal in the sintering aid to aluminium in the aluminium oxide monohydrate is from 1:7 to 1:25.

0107352

25. A process according to Claim 19, wherein the sintering aid is a compound of magnesium, zinc, nickel or cobalt.

26. A process according to Claim 3 or 10, wherein the sintering aid is a compound of magnesium, zinc, nickel or cobalt.

27. A process according to Claim 20, wherein the sintering aid is a compound of magnesium, zinc, nickel or cobalt.

28. A process according to Claim 25 or 27, wherein the sintering aid is prepared in situ from magnesium oxide or magnesium hydroxide and an inorganic acid.

29. A process according to Claim 26, wherein the sintering aid is prepared in situ from magnesium oxide or magnesium hydroxide and an inorganic acid.

30. A process according to Claim 28, wherein the alumina product comprises between about 2 and 10 weight percent magnesium oxide.

31. A process according to Claim 29, wherein the alumina product comprises between about 2 and about 10 weight percent magnesium oxide.

32. A process according to Claim 25 or 27, wherein the sintering aid is magnesium nitrate.

33. A process according to Claim 26, wherein the sintering aid is magnesium nitrate.

34. A process according to Claim 19, wherein at least one precursor of at least one component selected from the group consisting of:

(i) silica, chromia, titania, or zirconia, and at least one precursor of at least one component selected from the group consisting of:

(ii) magnesium oxide, zinc oxide, nickel oxide or cobalt oxide

is added to the liquid dispersion of step (a) in colloidal or dissolved form, said precursors being present in an amount up to 50 weight percent of solids in the dispersion.

35. A process according to Claim 3 or 10, wherein at least one precursor of at least one component selected from the group consisting of:

(i) silica, chromia, titania, or zirconia, and at least one precursor of at least one component selected from the group consisting of:

(ii) magnesium oxide, zinc oxide, nickel oxide or cobalt oxide

is added to the liquid dispersion of step (a) in colloidal or dissolved form, said precursors being present in an amount up to 50 weight percent of solids in the dispersion.

36. A process according to Claim 20, wherein at least one precursor of at least one component selected from the group consisting of:

(i) silica, chromia, titania, or zirconia, and at least one precursor of at least one component selected from the group consisting of:

(ii)    magnesium oxide, zinc oxide, nickel oxide or cobalt oxide

is added to the liquid dispersion of step (a) in colloidal or dissolved form, said precursors being present in an amount up to 50 weight percent of solids in the dispersion.

37.  A process according to Claim 1, 2, 3, 8, 9 or 10, wherein in step (a) from about 0.02 to about 0.25 moles of a volatile acid per mole of aluminium oxide monohydrate is added as a dispersing aid to the dispersion.

38.  A process according to Claim 37, wherein the acid is nitric acid.

39.  A process according to Claim 1, 2, 3, 8, 9 or 10, wherein the membrane is tubular in form.

40.  A process according to Claim 20, wherein the material is calcined at a temperature of from about 250°C to about 800°C until essentially all water is removed.

41.  A process according to Claim 3 or 10, wherein the sufficient sintering time is from about 5 to about 30 minutes.

42.  A process according to Claim 3 or 10, wherein the sufficient sintering time is less than 5 minutes.

43.  A process according to Claim 3 or 10, wherein at least a portion of said sintering occurs above 1300°C.

44.  A process according to Claim 3 or 10, wherein the rapid heating occurs in less than 5 minutes.

45. An alpha alumina product manufactured in accordance with a process according to any one of Claims 1 to 44.

FIG. 1

FIG. 2

FIG. 3

# 0107352

**European Patent Office**

## EUROPEAN SEARCH REPORT

Application number

| | DOCUMENTS CONSIDERED TO BE RELEVANT | | EP 83305665.8 | |
|---|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US - A - 3 976 554 (POWERS et al.) <br> * Totality * <br> -- | 1 | C 01 F 7/02 <br> C 25 D 1/14 <br> C 25 D 13/02 |
| D,A | US - A - 4 314 827 (LEITHEISER et al.) <br> * Claims; examples * <br> -- | 1,3,25 36,43 | C 04 B 35/10// <br> C 09 K 3/14 <br> C 04 B 31/16 |
| A | US - A - 2 966 449 (G.H. BOUCHARD et al.) <br> * Totality * <br> ---- | 1 | |

**TECHNICAL FIELDS SEARCHED (Int. Cl. ³)**

C 25 D
C 04 B
C 01 F 7/00
C 09 K
B 24 D

The present search report has been drawn up for all claims

| Place of search | Date of completion of the search | Examiner |
|---|---|---|
| VIENNA | 21-12-1983 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82